# EUROPEAN PATENT SPECIFICATION

(11) **EP 2 104 602 B1**
(45) Date of publication and mention of the grant of the patent: **22.02.2017**
(21) Application number: 07834715.0
(22) Date of filing: 23.11.2007
(51) Int. Cl.: B29C 43/18, B60C 13/00, B62D 35/00, B29C 35/02, B60C 1/00

(54) **METHOD FOR MANUFACTURING A MOULDED ARTICLE WITH INSERT FROM A RUBBER POLYMER**
VERFAHREN ZUR HERSTELLUNG EINES FORMARTIKELS MIT EINSATZ AUS EINEM KAUTSCHUKPOLYMER
PROCÉDÉ DE FABRICATION D'ARTICLE MOULÉ AVEC UNE PIÈCE INSÉRÉE EN POLYMÈRE DE CAOUTCHOUC

(30) Priority: 23.11.2006 NL 2000329
(43) Date of publication of application: 30.09.2009
(73) Proprietor: Apollo Vredestein B.V., 7547 RD Enschede (NL); Dr.Ing. h.c. F. Porsche Aktiengesellschaft, 70435 Stuttgart (DE)
(72) Inventor: REUVEKAMP, Louis-Philippe Antoine E. M., 7546 GE Enschede (NL); NIJMAN, Gerard, 7581 AV Losser (NL); GREVE, Cristian Bernhard Maria, 7522 BP Enschede (NL); JUNGERT, Dieter, 71287 Weissach (DE); BIERSACK, Harald, 70174 Stuttgart (DE)
(74) Representative: Patentwerk B.V.
(86) International application number: PCT/NL2007/050587
(87) International publication number: WO 2008/063066

(56) References cited:
- FR-A1- 2 454 899
- JP-A- 7 096 562
- US-B1- 6 279 633

## Description

The invention relates to a method for manufacturing a moulded article from a first rubber polymer with an insert from a second rubber polymer.

Moulded articles of a first rubber polymer must often be provided with for instance bands or strips of a second rubber polymer. The second rubber polymer then usually differs in respect of a particular property from the first rubber polymer. If the second rubber polymer for instance has a different colour from the first rubber polymer, decorative bands or strips are then formed such as appear for instance on the side surfaces of rubber tyres. The bands or strips of the second rubber polymer may also provide for a local strengthening and/or reinforcement of the moulded article.

In the manufacture of such moulded articles it is important that the first and second rubber polymer in the moulded article have a good mutual adhesion. In addition, the typical properties of rubber polymers must not be lost due to the mutual connection of the two rubber polymers. Particular properties must be retained, such as a low modulus of elasticity, low hardness, high elongation at break and thereby a high tensile strength, the highly elastic behaviour with a relatively low permanent set, and a relatively high independence from and resistance to temperatures, also in the moulded article with insert.

In a prior art method for manufacturing a moulded article from a first rubber polymer with an insert from a second rubber polymer, both rubber polymers are brought together in unvulcanized state in a vulcanizing mould and then vulcanized together. Such a method is for instance disclosed in JP-A-7096562 and in FR 2454899. Both prior art methods for manufacturing a moulded article from a first rubber polymer containing an insert from a second rubber polymer comprise the steps of (A) providing a vulcanizing mould with means for fixing the insert (B) applying the insert in the mould by said fixing means; (C) feeding the first rubber polymers to the mould in unvulcanized state; and (D) vulcanizing the moulded article. The insert in the disclosed methods is unvulcanized but is organic peroxide-crosslinkable.

Before a rubber polymer begins to vulcanize it must first be brought to a temperature suitable for the purpose. Because of the rise in temperature the viscosity of the rubber polymer decreases, whereby it may begin to flow under pressure. If two rubber polymers are arranged together in a vulcanizing mould and subsequently vulcanized, the two rubber polymers will then generally flow into each other, whereby the boundary surface between the two is not well defined. This phenomenon can for instance be seen in cycle tyres which are provided on the tread with a strip differing from the black colour and running in peripheral direction of the tyre. The dividing line between the strip and the rest of the tyre generally has a random waving. This is unacceptable for moulded articles for which high aesthetic standards are set.

In another method likewise known from the prior art both rubber polymers are first vulcanized separately, after which the two are adhered to each other. Although this has the advantage that a sharper dividing line between moulded article and insert is obtained, and thereby a better aesthetic appearance, the adhesion of a plurality of already vulcanized rubber polymers results in a composite moulded article with properties which can differ significantly from that which may be expected from rubber polymers. The adhesive applied in the boundary surface is generally more brittle and/or has a hardness and/or modulus of elasticity differing from the rubber polymers.

The present invention has for its object to provide a method according to the preamble, wherein the above stated drawbacks of the known method are at least partly obviated.

This object is achieved according to the invention by a method for manufacturing a moulded article from a first rubber polymer, which moulded article comprises an insert from a second rubber polymer, which method comprises at least the following steps of:
(A) providing a vulcanizing mould with mounting means for the insert;
(B) arranging an insert from the second rubber polymer, which is sufficiently reactive to vulcanize into substantially one network art the position of the boundary surface with the first rubber polymer, in the vulcanizing mould using the mounting means;
(C) adding the first rubber polymer to the vulcanizing mould in unvulcanized state;
(D) vulcanizing the moulded article at a suitable vulcanization temperature and subsequently removing the moulded article;
with the proviso that prior to step C) a reactive mixture comprising at least a peroxide is arranged on at least that side of the insert which comes into contact with the first rubber polymer during step C). By providing the insert with radicals at least at the position of the boundary surface the first rubber polymer, and possibly also the second rubber polymer, will vulcanize more rapidly at that position than is the case elsewhere. Flowing of the rubber polymers into each other at the position of the boundary surface is thus substantially prevented. If the two rubber polymers have a different colour, an optically sharp division will hereby result. Further achieved is that the two rubber polymers are durably adhered to each other without a separately added adhesive being required for this purpose. The typical rubber-elastic properties of the moulded article will moreover not differ, or hardly so, from the rubber-elastic properties of the two rubber polymers separately.

According to the invention, the insert is at least partially provided with a reactive mixture comprising at least a peroxide. The method according to the invention is more preferably characterized in that the reactive mixture comprises a solution of a peroxide in an organic solvent. The solvent is still more preferably a solvent comprising a carbonyl group. Suitable examples of such solvents are chosen from the group of aldehydes and ketones, and comprise for instance methyl ethyl ketone, acetone and the like. Such solvents are relatively volatile, which enhances the processability of the peroxide solution. An improved adhesion is obtained by dissolving the peroxide in a solvent prior to arranging of the peroxide on the relevant side of the insert. It has also been found that the vulcanization at the boundary surface between the two rubber polymers progresses more rapidly as a result of this measure. This is favourable because a sharper optical division is hereby obtained between the two. It will be apparent that both rubber polymers are not in fact separated chemically at their boundary surface, but substantially form a network incorporating chains or chain parts of both rubber polymers.

By arranging the reactive mixture on the insert the first rubber polymer, and possibly also the second rubber polymer, will vulcanize more rapidly at the position of the boundary surface than is the case elsewhere in the mould cavity. It is advantageous here when the method according to the invention is characterized in that the reactive mixture comprises a peroxide with an initiating temperature lower than the vulcanization temperature of the first rubber polymer. The initiating temperature of a peroxide can be easily determined and is indicated by the supplier of the peroxide. By choosing an initiating temperature of the peroxide which is lower than the temperature at which the first rubber polymer vulcanizes, the vulcanization at the boundary surface between the two rubber polymers will progress even more rapidly, whereby an even sharper division is obtained between the two rubber polymers. The advantages of the method according to the invention therefore become particularly manifest when the first and the second rubber polymer have different colours. Using this preferred embodiment of the method rubber polymer products can be made with sharply delineated contrasting inserts. The reactive mixture preferably comprises a peroxide with an initiating temperature at least 20°C lower than the vulcanization temperature of the first rubber polymer, and more preferably at least 50°C lower. The invention is not limited to the use of specific peroxides, but comprises in principle any peroxide suitable for the relevant rubber polymers. The invention also comprises alternatives to peroxides.

There can be a wide choice of the mounting means for the insert. It is thus possible to mount the inserts on the vulcanizing mould by means of adhesive, preferably by using two-sided and temperature-resistant adhesive tape, or by mechanical connection. It is also possible to place the part of the mould wall where the inserts have to be placed under, if desired partial, vacuum. The vacuum as it were suctions the inserts fixedly onto said wall parts. It is further also possible to clamp fixedly and thus fix the inserts between the two mould halves, for instance when the first rubber polymer is added by means of injection moulding to the vulcanizing mould in step C of the method. In order to enable more precise positioning of the inserts, they can if desired be arranged in recesses made for this purpose in the wall of the vulcanizing mould. It is possible here to make the inserts thicker than the height of the mould cavity so that the upper surface of the inserts comes to lie more or less in the plane of the moulded article, this being advantageous from an aesthetic and mechanical viewpoint.

According to the invention the insert is arranged in the vulcanizing mould in at least partially vulcanized state. This is understood to mean that the second rubber polymer is sufficiently reactive to vulcanize into substantially one network at the position of the boundary surface with the first rubber polymer. It has been found that a method in which the at least partially vulcanized insert comprises a second rubber polymer of which the main chain comprises a maximum of one unsaturated carbon/carbon bond per 200 carbon-carbon bonds produces a good adhesion between first and second rubber polymer. More preferred is a method wherein the at least partially vulcanized insert comprises a second rubber polymer of which the main chain comprises a maximum of one unsaturated carbon/carbon bond per 50 carbon/carbon bonds.

The rubber polymers as applied in the method according to the invention can be prepared in a manner known to the skilled person. Any known method of mixing polymers, fillers and other additives is in principle suitable for this purpose. It is thus possible to mix the rubber polymers, supplemented with additives and/or other polymers if desired, using an internal mixer or Banbury mixer, a single or double-screw extruder apparatus, a blade kneader, a Buss Co-kneader, a roller and the like. Suitable temperatures during mixing are substantially determined by the rheological properties of the relevant rubber polymer.

The first and second rubber polymers preferably applied in the method according to the invention can be selected from the known rubbers. In general these rubbers have a glass transition temperature Tg lower than -10°C, although this is not essential. Rubbers suitable for application are for instance chosen from the group of natural rubbers, isoprene rubbers, butadiene rubbers, styrene butadiene copolymer rubbers, acrylonitrile butadiene copolymer rubbers, if desired copolymerized with styrene, butadiene isoprene copolymer rubbers, chloroprene rubbers, butyl and acryl rubbers, and ethylene-propylene copolymers which, if desired, comprise a third copolymerizable diene monomer such as for instance 1,4-hexadiene, dicyclopentadiene, dicyclooctadiene, methylene norbomene, ethylidene norbornene and tetrahydroindene. If desired, the rubber polymer also comprises a minor quantity of natural rubber and/or elastomer, which is preferably composed of 1,3-diene compounds such as for instance butadiene and/or isoprene and/or 2,3-dimethyl butadiene. The rubber polymer applied in the method is preferably an ethylene-propylene rubber, and the applied rubber polymer is more preferably an ethylene-propylene-diene rubber (EPDM). Mixtures of said rubber polymers are likewise possible.

A cross-linker for the rubber polymer can be added if desired. Particularly suitable cross-linkers for the rubber polymer, in particular for the EPDM rubber polymer, comprise phenol resins in combination with a tin chloride compound as catalyst. In addition, it is also possible to apply cross-linkers on the basis of sulphur and/or peroxides. The cross-linker for the rubber polymer is preferably added only after the reactions and/or physical interactions of other additives, such as for instance a coupling agent, with the surface of the silica particles have at least partly taken place, so for instance at the end of the extruding device, if this is applied as mixing apparatus for the preparation of the rubber polymers. In addition to the second rubber polymer, the first rubber polymer can also be provided, if desired, with reactive groups such as for instance hydroxy groups, alkoxysilyl groups, amino and epoxide groups and/or carboxyl groups. Particularly suitable matrix polymers are those provided with carboxyl groups, for instance by grafting unsaturated dicarboxylic anhydride compounds onto the rubber polymer. A maleic anhydride-functionalized rubber polymer is particularly suitable as first and/or second rubber polymer.

If desired, additives can be added to the rubber polymers as applied in the method according to the invention. Examples of usual additives are stabilizers, antioxidants, lubricants, fillers, dyes, pigments, flame retardants, conductive fibres and reinforcing fibres. The rubber polymers can particularly also comprise an oil as additive. It is also possible to add petroleum plasticizers. Dyes suitable for the first and/or second rubber polymer comprise any type known to the skilled person. It is thus possible to apply organic and/or inorganic dyes, and dyes which are soluble and/or non-soluble in the rubber polymer. Examples of suitable mineral dyes include metals in powder form, such as for instance powdered aluminium, copper, metal oxides such as for instance silicates, aluminates, titanates, iron oxides and/or hydroxides, in addition to mixtures of oxides of for instance cobalt, aluminium or zinc. Suitable organic colour pigments comprise for instance indanthrones, pyrroles and/or diazo compounds, in addition to organometallic pigments such as for instance phthalocyanines. Coupling agents suitable for the rubber polymers according to the invention comprise silane compounds. Particularly suitable silane compounds comprise di- and tetrasulphides. If desired, the rubber polymers can also comprise soot particles and/or silica particles, in principle of any known type. Suitable silica particles are for instance substantially built up of primary particles with an average particle size of about 30 nm, agglomerates of silica particles with an average size of several hundred nm, and aggregates of silica particles with an average size of about 10 µm. The average particle size of the silica particles preferably lies between 0.1 and 50 µm, more preferably between 1 and 30 µm. If desired, the particle size distribution of the silica particles can be modified, for instance by sieving and/or grinding the silica particles.

The invention also relates to a moulded article from a first rubber polymer and at least one insert from a second rubber polymer, which moulded article can be obtained with the method according to the invention. Such a moulded article preferably comprises a first rubber polymer in a first colour and a second rubber polymer in a second colour. The first rubber polymer more preferably has a black colour and the second rubber polymer is coloured. Within the scope of this application, coloured is understood to mean a colour differing from black, including white and/or metallic colours. The moulded articles can in principle have all colours, such as for instance red, green, yellow, blue, indigo, purple and brown. The moulded article which can be obtained with the method according to the invention from a first rubber polymer and at least one insert from a second rubber polymer has the special feature that the insert is preferably connected to the first rubber polymer without adhesive, wherein the insert in the moulded article moreover has substantially the same form as the partially vulcanized insert. This is understood to mean that the form of the insert in the moulded article is substantially unaffected by the specific method with which the moulded article is manufactured.

Particularly suitable moulded articles according to the invention comprise a rubber tyre or a spoiler for a vehicle. The rubber tyre can be provided over its whole surface with inserts, for instance on the tread or, conversely, on the sides of the tyre. The inserts can be used as indicator, for instance to indicate the degree of wear of the tyre, or can be arranged for aesthetic reasons. The method is also particularly suitable for manufacturing flexible spoilers, or more generally for flexible bodywork parts of cars or other vehicles. Such bodywork components often require decoration, wherein high standards are set for the decoration. A flexible spoiler is for instance described in the American patent applications US 2005/0012359 and in US 2005/0017541, the content of which is expressly included here in the present application. The spoiler described herein comprises an airflow-conducting element and an operating element therefor. The airflow-conducting element is attached to the bottom of the bumper, is manufactured from a rubber polymer and can be moved in and out by means of the operating element. A resilient connection between airflow-conducting element and bumper holds the spoiler in the moved-in inoperative position. The operating member can for instance take the form of a number of inflatable bellows disposed on the rear side of the spoiler. When the inflatable bellows are inflated, the spoiler moves forward from the moved-in position to the moved-out position. A fibre-reinforced plastic rod provides for lateral guiding of the element. On the basis of the method according to the invention the spoiler can be decorated with black and/or coloured inserts, for instance in the form of laterally running bands. It will be apparent that the invention is not limited to particular forms, but that in principle any form is possible.

The present invention will now be further elucidated on the basis of the following example, without however being limited thereto.

### Example I

A first and a second mixture of ethylene-propylene-diene rubber (EPDM, Keltan 514 from the DSM company) and the constituents stated in table 1 were prepared by mixing in a standard kneader for about 5 minutes at an average temperature of about 150C. The silica applied in the second mixture came from the Rhodia company, type Zeosil-1165MP, with a CTAB-specific surface area of 155 m²/g. A polysiloxane compound (bis-(triethoxysilylpropyl)tetrasulphide from the Degussa company) was used as coupling agent. A standard vulcanizing system on the basis of sulphur was added to both mixtures. Usual pigments for EPDM and titanium dioxide were further added in the second mixture. The quantities given in table 1 are parts per hundred parts of EPDM rubber (phr).

**Table 1: Polymer compositions**

| Material | First rubber polymer | Second rubber polymer |
|---|---|---|
| EPDM | 100 | 100 |
| Oil | 20 | 20 |
| Silica | - | 50 |
| Coupling agent | - | 3,5 |
| Soot | 70 | - |
| Zinc oxide | 5 | 5 |
| Stearic acid | 1 | 1 |
| Vulcanization system | 10 | 10 |
| Titanium dioxide | - | 5 |
| Pigments | - | 15 |
| UV stabilizers | - | 5 |

The thus obtained second mixture was then rolled out and cooled by being subjected to a rolling process at about 50°C. The sheet-like second rubber composition was then vulcanized for about 12 minutes at a temperature of about 160°C. After completion of the vulcanization the sheets of second rubber polymer were then cooled to room temperature and cut into coloured inserts. Injection moulding or compression moulding of the second rubber composition is also possible according to the invention. A number of the thus obtained inserts were then arranged in a mould cavity and connected thereto by means of double-sided temperature-resistant adhesive tape. The parts of the inserts remote from the mould wall were then smeared with a reactive mixture comprising a Perkadox BC peroxide from the Akzo company with an initiating temperature of 130°C. The still unvulcanized first rubber polymer was then placed in the other mould half. The mould was closed and brought to the vulcanization temperature of about 160°C. It is also possible to bring the mould to this temperature in advance, or to choose another temperature. After about 12 minutes the mould was opened and the moulded article removed from the mould. The moulded article comprised a black matrix incorporating a number of inserts. The inserts were adhered well to the first (black) rubber polymer and had almost the same form as before vulcanization of the moulded article. The division between the (black) matrix part of the moulded article and the (coloured) inserts was sharp.

## Claims

1. Method for manufacturing a moulded article from a first rubber polymer, which moulded article comprises an insert from a second rubber polymer, which method comprises at least the following steps of:
(A) providing a vulcanizing mould with mounting means for the insert;
(B) arranging an insert from the second rubber polymer, which is sufficiently reactive to vulcanize into substantially one network at the position of the boundary surface with the first rubber polymer, in the vulcanizing mould using the mounting means;
(C) adding the first rubber polymer to the vulcanizing mould in unvulcanized state;
(D) vulcanizing the moulded article at a suitable vulcanization temperature and subsequently removing the moulded article;
with the proviso that prior to step C) a reactive mixture comprising at least a peroxide is arranged on at least that side of the insert which comes into contact with the first rubber polymer during step C).

2. Method as claimed in claim1, **characterized in that** the reactive mixture comprises a solution of a peroxide in an organic solvent.

3. Method as claimed in claim 2, **characterized in that** the reactive mixture comprises a solution of a peroxide in solvent comprising a carbonyl group.

4. Method as claimed in any of the claims 1-3, **characterized in that** the reactive mixture comprises a peroxide with an initiating temperature lower than the vulcanization temperature of the first rubber polymer.

5. Method as claimed in claim 4, **characterized in that** the reactive mixture comprises a peroxide with an initiating temperature at least 20°C lower than the vulcanization temperature of the first rubber polymer.

6. Method as claimed in claim 4, **characterized in that** the reactive mixture comprises a peroxide with an initiating temperature at least 50°C lower than the vulcanization temperature of the first rubber polymer.

7. Method as claimed in any of the foregoing claims, **characterized in that** the first and the second rubber polymer have a different colour.

8. Method as claimed in any of the foregoing claims, **characterized in that** the insert comprises a second rubber polymer of which the main chain comprises a maximum of one unsaturated carbon/carbon bond per 50 carbon-carbon bonds.

9. Method as claimed in claim 8, **characterized in that** the insert comprises a second rubber polymer of which the main chain comprises a maximum of one unsaturated carbon/carbon bond per 200 carbon-carbon bonds.

10. Method as claimed in any of the foregoing claims, **characterized in that** the first and/or second rubber polymer comprises an ethylene-propylene-diene rubber (EPDM).

11. Method as claimed in any of the foregoing claims, **characterized in that** the first and/or second rubber polymer comprises additives chosen from the group of the cross-linkers, stabilizers, antioxidants, lubricants, fillers, dyes, pigments, flame retardants, conductive fibres, reinforcing fibres, oil and petroleum plasticizers.

12. Moulded article from a first rubber polymer and at least one insert from a second rubber polymer,
which moulded article is obtainable by the method as claimed in any of the foregoing claims 1-11.

13. Moulded article as claimed in claim 12, comprising a rubber tyre or a spoiler for a vehicle.

## Patentansprüche

1. Verfahren zum Herstellen eines Formkörpers aus einem ersten Kautschukpolymer, welcher Formkörper einen Einsatz aus einem zweiten Kautschukpolymer umfasst, welches Verfahren wenigstens die folgenden Schritte umfasst:
(A) Bereitstellen einer Vulkanisierform mit Befestigungsmitteln für den Einsatz;
(B) Anordnen eines Einsatzes aus dem zweiten Kautschukpolymer, das ausreichend reaktionsfähig ist, um an der Stelle der Grenzfläche mit dem ersten Kautschukpolymer zu im Wesentlichen einem Netzwerk zu vulkanisieren, in der Vulkanisierform unter Verwendung der Befestigungsmittel;
(C) Zugeben des ersten Kautschukpolymers zu der Vulkanisierform in nichtvulkanisiertem Zustand;
(D) Vulkanisieren des Formkörpers bei einer geeigneten Vulkanisationstemperatur und anschließend Entnehmen des Formkörpers;
mit der Maßgabe, dass vor Schritt C) ein reaktionsfähiges Gemisch, das wenigstens ein Peroxid umfasst, an wenigstens jener Seite des Einsatzes angeordnet wird, die während Schritt C) in Kontakt mit dem ersten Kautschukpolymer kommt.

2. Verfahren gemäß Anspruch 1, **dadurch gekennzeichnet, dass** das reaktionsfähige Gemisch eine Lösung eines Peroxids in einem organischen Lösungsmittel umfasst.

3. Verfahren gemäß Anspruch 2, **dadurch gekennzeichnet, dass** das reaktionsfähige Gemisch eine Lösung eines Peroxids in einem Lösungsmittel umfasst, das eine Carbonylgruppe umfasst.

4. Verfahren gemäß einem der Ansprüche 1-3, **dadurch gekennzeichnet, dass** das reaktionsfähige Gemisch ein Peroxid umfasst, das eine Initiierungstemperatur aufweist, die niedriger als die Vulkanisationstemperatur des ersten Kautschukpolymers ist.

5. Verfahren gemäß Anspruch 4, **dadurch gekennzeichnet, dass** das reaktionsfähige Gemisch ein Peroxid umfasst, das eine Initiierungstemperatur aufweist, die wenigstens 20 °C niedriger als die Vulkanisationstemperatur des ersten Kautschukpolymers ist.

6. Verfahren gemäß Anspruch 4, **dadurch gekennzeichnet, dass** das reaktionsfähige Gemisch ein Peroxid umfasst, das eine Initiierungstemperatur aufweist, die wenigstens 50 °C niedriger als die Vulkanisationstemperatur des ersten Kautschukpolymers ist.

7. Verfahren gemäß einem der vorstehenden Ansprüche, **dadurch gekennzeichnet, dass** das erste und das zweite Kautschukpolymer unterschiedliche Farben aufweisen.

8. Verfahren gemäß einem der vorstehenden Ansprüche, **dadurch gekennzeichnet, dass** der Einsatz ein zweites Kautschukpolymer umfasst, dessen Hauptkette höchstens eine ungesättigte Kohlenstoff-Kohlenstoff-Bindung pro 50 Kohlenstoff-Kohlenstoff-Bindungen aufweist.

9. Verfahren gemäß Anspruch 8, **dadurch gekennzeichnet, dass** der Einsatz ein zweites Kautschukpolymer umfasst, dessen Hauptkette höchstens eine ungesättigte Kohlenstoff-Kohlenstoff-Bindung pro 200 Kohlenstoff-Kohlenstoff-Bindungen aufweist.

10. Verfahren gemäß einem der vorstehenden Ansprüche, **dadurch gekennzeichnet, dass** das erste und/oder zweite Kautschukpolymer einen Ethylen-Propylen-Dien-Kautschuk (EPDM) umfasst.

11. Verfahren gemäß einem der vorstehenden Ansprüche, **dadurch gekennzeichnet, dass** das erste und/oder zweite Kautschukpolymer Zusatzstoffe ausgewählt aus der Gruppe von Vernetzern, Stabilisatoren, Antioxidationsmitteln, Gleitmitteln, Füllstoffen, Farbstoffen, Pigmenten, Flammhemmern, leitfähigen Fasern, Verstärkungsfasern, Öl und Petroleum-Weichmachern umfasst.

12. Formkörper aus einem ersten Kautschukpolymer und wenigstens einem Einsatz aus einem zweiten kautschukpolymer, welcher Formkörper durch das Verfahren gemäß einem der vorstehenden Ansprüche 1-11 erhältlich ist.

13. Formkörper gemäß Anspruch 12, umfassend einen Gummireifen oder einen Spoiler für ein Fahrzeug.

## Revendications

1. Procédé de fabrication d'un article moulé à partir d'un premier polymère de caoutchouc, ledit article moulé comprenant un insert d'un deuxième polymère de caoutchouc, ledit procédé comprenant au moins les étapes suivantes de :
(A) fourniture d'un moule de vulcanisation avec des moyens de montage pour l'insert ;
(B) agencement d'un insert du deuxième polymère de caoutchouc, qui est suffisamment réactif pour être vulcanisé sensiblement en un réseau à la position de la surface de limite avec le premier polymère de caoutchouc, dans le moule de vulcanisation en utilisant les moyens de montage ;
(C) ajout du premier polymère de caoutchouc au moule de vulcanisation dans l'état non vulcanisé ;
(D) vulcanisation de l'article moulé à une température de vulcanisation adaptée et ensuite retrait de l'article moulé ;
à condition qu'avant l'étape C), un mélange réactif comprenant au moins un peroxyde soit agencé sur au moins le côté de l'insert qui entre en contact avec le premier polymère de caoutchouc pendant l'étape C).

2. Procédé selon la revendication 1, **caractérisé en ce que** le mélange réactif comprend une solution d'un peroxyde dans un solvant organique.

3. Procédé selon la revendication 2, **caractérisé en ce que** le mélange réactif comprend une solution d'un peroxyde dans un solvant comprenant un groupe carbonyle.

4. Procédé selon l'une quelconque des revendications 1 à 3, **caractérisé en ce que** le mélange réactif comprend un peroxyde avec une température d'initiation inférieure à la température de vulcanisation du premier polymère de caoutchouc.

5. Procédé selon la revendication 4, **caractérisé en ce que** le mélange réactif comprend un peroxyde ayant une température d'initiation au moins 20 °C plus basse que la température de vulcanisation du premier polymère de caoutchouc.

6. Procédé selon la revendication 4, **caractérisé en ce que** le mélange réactif comprend un peroxyde ayant une température d'initiation au moins 50 °C plus basse que la température de vulcanisation du premier polymère de caoutchouc.

7. Procédé selon l'une quelconque des revendications précédentes, **caractérisé en ce que** le premier et le deuxième polymère de caoutchouc ont une couleur différente.

8. Procédé selon l'une quelconque des revendications précédentes, **caractérisé en ce que** l'insert comprend un deuxième polymère de caoutchouc dont la chaîne principale comprend un maximum d'une liaison carbone/carbone insaturée par 50 liaisons carbone-carbone.

9. Procédé selon la revendication 8, **caractérisé en ce que** l'insert comprend un deuxième polymère de caoutchouc dont la chaîne principale comprend un maximum d'une liaison carbone/carbone insaturée par 200 liaisons carbone-carbone.

10. Procédé selon l'une quelconque des revendications précédentes, **caractérisé en ce que** le premier et/ou deuxième polymère de caoutchouc comprend un caoutchouc éthylène-propylène-diène (EPDM).

11. Procédé selon l'une quelconque des revendications précédentes, **caractérisé en ce que** le premier et/ou deuxième polymère de caoutchouc comprend des additifs choisis dans le groupe des agents de réticulation, stabilisants, antioxydants, lubrifiants, charges, colorants, pigments, agents ignifugeants, fibres conductrices, fibres de renforcement, plastifiants d'huile et de pétrole.

12. Article moulé d'un premier polymère de caoutchouc et au moins un insert d'un deuxième polymère de caoutchouc, ledit article moulé pouvant être obtenu par le procédé selon l'une quelconque des revendications précédentes.

13. Article moulé selon la revendication 12, comprenant un pneu ou un déflecteur en caoutchouc pour un véhicule.
